# EUROPÄISCHE PATENTANMELDUNG

(11) **EP 0 752 679 A2**
(43) Veröffentlichungstag der Anmeldung: **08.01.1997**
(21) Anmeldenummer: 96107152.9
(22) Anmeldetag: 07.05.1996
(51) Int. Cl.: G06K 7/06

(54) **Lesegerät für eine Chipkarte**

(30) Priorität: 05.07.1995 DE 19524536
(71) Anmelder: Preh-Werke GmbH & Co. KG, 97616 Bad Neustadt (DE)
(72) Erfinder: Brüggemann, Ulrich, 97618 Heustreu (DE); Hochgesang, Gerhard, 97616 Bad Neustadt (DE); Schmöger, Klaus, 97616 Bad Neustadt (DE)
(74) Vertreter: Pfeiffer, Helmut, Dipl.-Ing.

(57) **Zusammenfassung**

Die Erfindung bezieht sich auf eine in einem Lesegerät für Chipkarten (3) enthaltene Kontaktvorrichtung.

Durch eine Zwangsführung eines Schlittens (11) an den Kontaktfedern (12 bis 19) angebracht sind, erfolgt eine an den Anschlußkontakten (4, 6) reibungsfreie Zuführung der Chipkarte (3) sowie eine reibungsfreie Entnahme selbiger. Diese Zwangsführung wird dadurch erreicht, daß in einer Leiterplatte (5) des Lesegerätes ein freigeschnittener Bereich (7) geschaffen wird, in dem der Schlitten (11) über eine Schlittenführung (8) mit Kulissenführung (9) und Führungszapfen (10) verschoben wird.

## Beschreibung

Die Erfindung betrifft ein Lesegerät für eine Chipkarte gemäß Oberbegriff des Anspruchs 1.

Ein bekanntes Lesegerät mit Kontakteinrichtung stellt das DE-GM 85 29 580 dar. Hierbei ragen die Kontaktnasen an Kontaktfederbügeln durch Öffnungen in der Wandung der Einstecktasche einer Chipkarte. Die elektrische Verbindung mit der Chipkarte erfolgt über diese herausragenden Kontaktnasen im Gerät. Die geräteseitigen Enden der Kontaktfedern stehen in Festkontakt mit einer Auswerteelektronik. Die chipkartenseitigen Enden kontaktieren federnd und lösbar die Kontaktflächen einer Chipkarte. Die US 4,735,578 und US 4,976,630 zeigen ein Lesegerät mit in der Kontaktvorrichtung ortsveränderlichen Kontaktfedern und einem Schlitten. Auch hierbei ragen die Kontaktnasen an den Kontaktfedern aus den Schlitten heraus. Zwischen den geräteseitigen Enden der Kontaktfedern und der Auswerteelektronik besteht eine flexible Leiterverbindung, z. B. mittels Leiterfolie oder Flachkabel. Diese flexiblen Leiterverbindungen haben den Nachteil, daß sie, bedingt durch ihre Arbeitsumgebung und mechanische Beanspruchung, reißen oder brechen können. Außerdem weisen die Lösungen einen Reibungsangriff auf die Kontaktfläche der Chipkarte auf, was eine erhöhte Abnutzung dieser Kontaktfläche bewirkt.

Aufgabe der Erfindung ist es daher, eine reibungsfreie Kontaktierung der Chipkarte zu schaffen und flexible Leiterverbindungen zu vermeiden.

Erfindungsgemäß wird die Aufgabe durch die im Anspruch 1 benannten Merkmale gelöst.

Durch die zusätzliche Zwangsführung des Schlittens wird eine reibungsfreie Kontaktierung zwischen den Kontaktfedern und den Anschlußkontakten der Chipkarte und die Kontaktierung der Leiterplatte erzeugt. Wird nämlich die Chipkarte und damit der Schlitten bis zum Anschlag geschoben, legen sich diese Kontaktfedern erst zu diesem Zeitpunkt auf die Anschlußkontakte der Chipkarte und der Leiterplatte des Gerätes. Eine vorherige. Kontaktierung während der Verschiebung ist nicht möglich. Bei der Ausgabebewegung der Chipkarte setzen sich aufgrund der Zwangsführung des Schlittens die Kontaktfedern gleich von der Anschlußkontakten ab, so daß auch hierbei ein reibungs- und kontaktfreies Verschieben in Ausgangsstellung erfolgt.

Das erfindungsgemäß ausgebildete Lesegerät mit der besonders ausgebildete Kontaktvorrichtung weist weitere vorteilhafte Merkmale auf, die in den Unteransprüchen beschrieben sind.

So bewirkt die Einbringung der Zwangsführung des Schlittens in die Leiterplatte im freigeschnittenen Bereich eine Reduzierung der Bauhöhe der Kontukteinrichtung und damit des Lesegeräts. Gleichfalls führen der Wegfall der flexiblen Leiterverbindung und der integrierte Einbau der Rückstellfedern im hinteren Teil der Schlittenführung dazu. Durch die erfindungsgemäße Anordnung der Kontaktfedern am Schlitten, sowie deren einseitige Ausrichtung erfolgt die Kontaktaufnahme mit der Chipkarte und eine mögliche Bauelementenbestückung auf der Gegenseite der Leiterplatte platzsparender. Das hat zur Folge, daß die Leiterplatte und damit der Kontaktbereich konstruktiv kleiner gestaltet werden und sich dadurch die Baulänge des Lesegerätes reduziert.

Näher erläutert wird die erfindungsgemäße Lösung anhand eines bevorzugten Ausführungsbeispiels. Es zeigen:
- Figur 1: eine Draufsicht auf die Kontaktvorrichtung und
- Figur 2: eine perspektivische Schnittdarstellung gemäß der Schnittlinie A-A der Figur 1

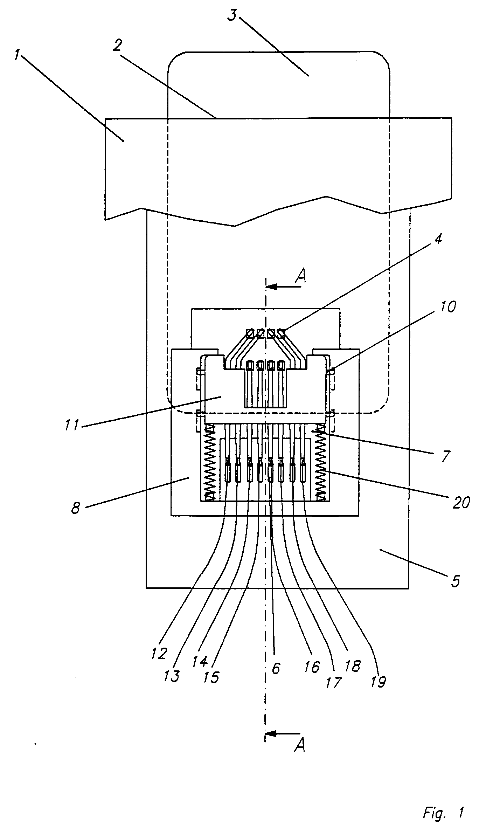

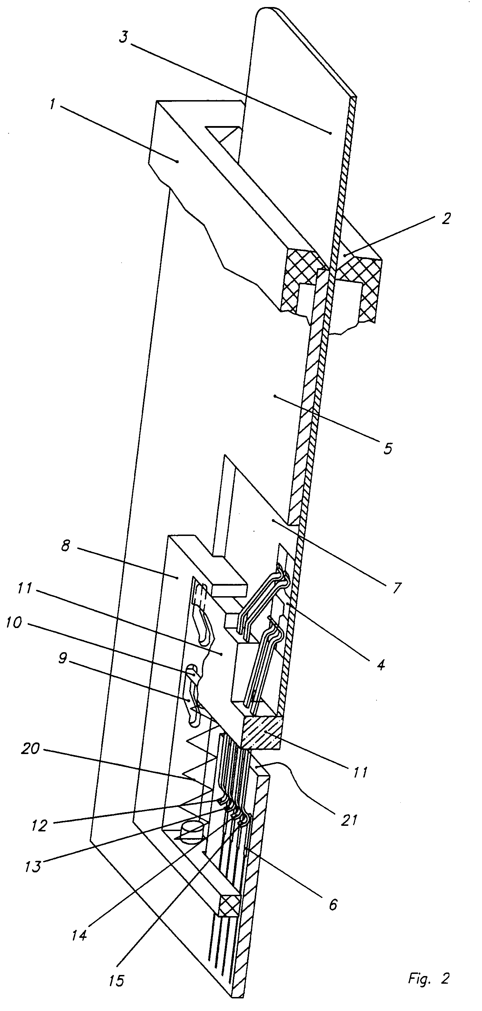

Ein Gehäuse 1 eines im einzelnen nicht näher dargestellten Lesegerätes weist eine schmalseitig offene Einstecktasche 2 für eine Chipkarte 3 auf. Auf der Oberfläche der Chipkarte 3 befinden sich in zwei Reihen in einem quadratischen Kontaktfeld acht Anschlußkontaktstellen 4. Im Gehäuse 1 ist eine Leiterplatte 5, die mit nicht näher dargestellten Bauelementen bestückt ist, befestigt. Auf der Leiterplatte 5 sind nebeneinanderliegend acht Anschlußkontakte 6 aufgebracht. Die Leiterplatte 5 weist einen freigeschnittenen Bereich in Gestalt einer Ausnehmung 7 (vgl. Fig. 1) auf. Beidseitig der Ausnehmung 7 ist eine mit der Leiterplatte 5 fest verbundene Schlittenführung 8 rechts und links der Verschiebungsrichtung der Chipkarte 3 angeordnet. Die Schlittenführung 8 weist auf jeder Seite eine doppelt angeordnete, im wesentlichen Z-förmig ausgebildete Kulissenführung 9 auf (vgl. Fig. 2). In der Kulissenführung 9 ist über Führungszapfen 10, in weiter unten näher beschriebener Weise, zwangsgeführt ein Schlitten 11 angebracht. Am Schlitten 11 sind mit den Anschlußkontakten 4 der Chipkarte 3 und den Anschlußkontakten 6 der Leiterplatte 5 zusammenwirkende Kontaktfedern 12 bis 19 befestigt.

Bedingt durch die Gestaltung am Schlitten 11 wird eine einseitige Ausrichtung der Kontaktfedern 12 bis 19 realisiert, wobei die federnde Länge der Kontaktfedern 12 bis 19 annähernd gleich ist, deren Form jedoch unterschiedlich. Dies ist notwendig, damit gleiche Kräfte auf die Anschlußflächen 4 und 6 wirken und damit eine gleichmäßige sowie vollständige Kontaktierung erfolgt. Die vier mittleren Kontaktfedern 14 bis 17 besitzen eine gerade und die zwei jeweils außen liegenden Kontaktfedern 12, 13, 18, 19 eine zu den Kontaktfedern 14 bis 17 gebogene Form, vorzugsweise im Winkel von 40° (Fig. 1). Dadurch erfolgt der Signalfluß zwischen Leiterplatte 5 und Chipkarte 3 gleichseitig, so daß die Kontaktaufnahme mit der Chipkarte 3 und die Bauelementenbestückung auf der Leiterplatte 5 platzsparender gestaltet wird. Es ist dabei unerheblich, ob die Kontaktfedern 12 bis 19 unterhalb des Schlittens 11 oder oberhalb geführt und befestigt werden. Beide Möglichkeiten sind durchführbar.

Die zusammengedrückten Rückstellfedern 20, vorzugsweise als Druckfedern ausgebildet, drücken bei Entnahme der Chipkarte 3 den Schlitten 11 zurück, damit die Kontaktfedern 12 bis 19 von den Anschlußkontaktstellen 4 und Anschlußkontakten 6 weg. Die Chipkarte 3 wird ohne Schleifen an den Kontakten 4 wieder ausgegeben.

Die Führung des Schlitten 11 erfolgt dabei aufgrund der Gestaltung der Kulissenführung 9 ebenfalls lageorientiert. Die doppelt gestaltete Form der Kulissenführung 9 verhindert ein Ausbrechen, Verkanten o. ä. des Schlittens 11.

In der Schlittenführung 8 sind Rückstellfedern 20 versenkt integriert (vgl. Fig. 2).

In Ruhelage der Chipkarte 3 in der Einstecktasche 2 des Gehäuses 1 werden durch die Wirkung der Rückstellfedern 20 der Schlitten 11 und somit die Kontaktfedern 12 bis 19 auf der Seite der Anschlußkontakte 4 der Chipkarte 3 und der Seite der Anschlußkontakte 6 der Leiterplatte 5 in angehobener Position gehalten. Die Anschlußkontakte 6 der Leiterplatte 5 und die Anschlußkontaktstellen 4 der Chipkarte 3 werden somit von den Kontaktfedern 12 bis 19 nicht berührt und dadurch nicht elektrisch verbunden.

Mit Betätigung der Chipkarte 3 an der Einstecktasche 2 in Kontaktierrichtung wird der Schlitten 11 in der Kulissenführung 9 kurzzeitig parallel zur Leiterplatte 5 und danach im wesentlichen senkrecht, in Beibehaltung seiner horizontalen Lage, abgesenkt geführt. Dieses Absenken bewirkt, daß die Kontaktfedern 12 bis 19 erst zu diesem Zeitpunkt, d. h. gegen Ende der Verschiebung der Chipkarte 3 auf die entsprechenden Anschlußkontaktstellen 4 und dazugehörigen Anschlußkontakte 6 aufsetzen und diese elektrisch verbinden. Dabei erreicht der Schlitten 11 die Randkante 21 der Leiterplattenausnehmung 7, die als Anschlag des Schlittens 11 und damit für die Chipkarte 3 dient.

## Patentansprüche

1. Lesegerät für Chipkarten, wie beispielsweise Telefonkarten, Patientenkarten, Geldkarten, mit einem eine Einstecktasche (2) für die Chipkarte (3) aufweisenden Gehäuse (1), einem darin über die Chipkarte (3) entgegen Federwirkung und begrenzt durch einen Anschlag verschiebbar gelagerten Schlitten (11) sowie einer Kontaktvorrichtung mit Kontaktfedern (12 bis 19) und einer Leiterplatte (5), **dadurch gekennzeichnet**, daß die Kontaktfedern (12 bis 19) unmittelbar am Schlitten (11) befestigt sind und letzterer zusätzlich zu seiner Verschiebungsbewegung im wesentlichen vertikal dazu derart zwangsgeführt ist, daß erst gegen Ende der Einschiebebewegung der Chipkarte (3) eine Verbindung zwischen den Anschlußkontakten (4) der Chipkarte (3) und den Anschlußkontakten (6) dar Leiterplatte (5) über die Kontaktfedern (12 bis 19) beidseitig hergestellt und diese Kontaktverbindung unmittelbar nach Beginn der Entnahmebewegung der Chipkarte (3) unterbunden ist.

2. Lesegerät für Chipkarten nach Anspruch 1, **dadurch gekennzeichnet**, daß zur zusätzlichen Zwangsführung des Schlittens (11) auf dessen beiden Seiten jeweils eine Kulissenführung (9) vorgesehen ist, in denen am Schlitten (11) befestigte Führungszapfen (10) geführt sind.

3. Lesegerät für Chipkarten nach Anspruch 2, **dadurch gekennzeichnet**, daß die Kulissenführung (9) jeweils von im wesentlichen Z-förmig ausgebildeten Führungsschlitzen gebildet sind.

4. Lesegerät für Chipkarten nach Anspruch 3, **dadurch gekennzeichnet**, daß die Führungsschlitze in der Kulissenführung (9) je doppelt angeordnet sind.

5. Lesegerät für Chipkarten nach einem der vorgenannten Ansprüche, **dadurch gekennzeichnet**, daß der Verschiebeweg des Schlittens (11) innerhalb eines freigeschnittenen Bereichs (7) der Leiterplatte (5) liegt.

6. Lesegerät für Chipkarten nach Anspruch 5, **dadurch gekennzeichnet**, daß eine Randkante (21) des freigeschnittenen Bereichs (7) der Leiterplatte (5) als Anschlag zur Begrenzung der Schiebebewegung des Schlittens (11) dient.

7. Lesegerät für Chipkarten nach einem der vorgenannten Ansprüche, **dadurch gekennzeichnet**, daß am Schlitten (11) wenigstens eine als Druckfeder ausgebildete Rückstellfeder (20) angreift, die fest in den Schlitten (11) versenkt integriert ist.

8. Lesegerät für Chipkarten nach einem der Ansprüche 5 oder 6, **dadurch gekennzeichnet**, daß die zumindest teilweise in den freigeschnittenen Bereich (7) der Leiterplatte (5) hineinragenden Kontaktfedern (12 bis 19) einseitig zur Leiterplatte (5) ausgerichtet sind.

9. Lesegerät für Chipkarten nach einem der vorgenannten Ansprüche, **dadurch gekennzeichnet**, daß die Kontaktfedern (12 bis 19) bei Vorschiebung des Schlittens (5) in Anschlag beidendig auf den Anschlußkontakten (4) der Chipkarte (3) und den Anschlußkontakten (6) der Leiterplatte (5) aufliegen.

10. Lesegerät für Chipkarten nach einem der vorgenannten Ansprüche, **dadurch gekennzeichnet**, daß die Kontaktfedern (14 bis 17) eine gerade und die Kontaktfedern (12, 13, 18, 19) eine zu den geraden teilweise nach innen gebogene Form aufweisen.

11. Lesegerät für Chipkarten nach einem der vorgenannten Ansprüche, **dadurch gekennzeichnet**, daß die federnde Länge der geraden Kontaktfedern (14 bis 17) und der gebogenen Kontaktfedern (12, 13, 18, 19) annähernd gleich ist.
